# EUROPEAN PATENT APPLICATION

(11) **EP 3 062 426 A1**
(43) Date of publication of application: **31.08.2016**
(21) Application number: 16156849.8
(22) Date of filing: 23.02.2016
(51) Int. Cl.: H02K 29/03, H02K 1/14, H02K 7/04, H02K 29/08, H02K 1/27

(54) **SINGLE-PHASE BRUSHLESS MOTOR**

(30) Priority: 27.02.2015 CN 201510090157; 18.06.2015 CN 201520426013 U
(71) Applicant: Johnson Electric S.A., 3280 Murten (CH)
(72) Inventor: Li, Yue, Hong Kong (HK); Zhou, Chui You, Hong Kong (HK); Li, Gang, Hong Kong (HK); Wang, Yong, Hong Kong (HK); Li, Yong, Hong Kong (HK)
(74) Representative: Hocking, Adrian Niall

(57) **Abstract**

The present invention provides a single-phase motor, comprising a stator and a rotor. The stator comprises a stator magnetic core (3) and a winding (5) wound on the stator magnetic core (3), the stator magnetic core (3) comprises an annular yoke (31) and a plurality of teeth (32) extending inwards from the yoke (31), crowns (321) extending circumferentially are formed at the tail ends of the teeth (32) that are far away from the yoke (31), the crowns (321) of the adjacent teeth (32) are interconnected to form an annular portion (33), the winding (5) is wound on the corresponding teeth (32), the rotor is accommodated in the annular portion (33) of the stator magnetic core (3), the rotor comprises a rotor magnetic core (6) and permanent-magnet poles (71), the rotor magnetic core (6) is provided with a plurality of grooves (61), each permanent-magnet pole (71) is disposed within the corresponding groove (61), and slots (62) are formed in positions on the peripheral surface of the rotor magnetic core (6) that correspond to the grooves (61).

## Description

### CROSS REFERENCE TO RELATED APPLICATIONS

This non-provisional patent application claims priority under 35 U.S.C. § 119(a) from Patent Application No. 201510090157.2 filed in The People's Republic of China on Feb 27, 2015 and Patent Application No. 201520426013.5 filed in The People's Republic of China on Jun 18, 2015.

### Technical Field

The present invention relates to the technical field of motors, in particular to a single-phase brushless motor.

### Background Art

Motors are a kind of devices that convert electrical energy into mechanical energy by utilizing the principle of electromagnetic induction, which is widely used in industrial production and various electric appliances for daily life.

Existing motors can be divided into direct current motors and alternating current motors, and wherein, brushless direct current electric motors are widely used in fields such as household electrical appliance, automobile, industrial control, automation and aerospace.

According to the number of phases of stator winding coil of the brushless DC motor, brushless DC motors can be divided into single-phase brushless direct-current motors and multi-phase brushless DC motors. Although multi-phase brushless DC motors are operationally reliable and have high efficiency and low noise, it is expensive to produce them. Single-phase brushless direct current motors are inexpensive to produce and are widely used in domestic electric appliances.

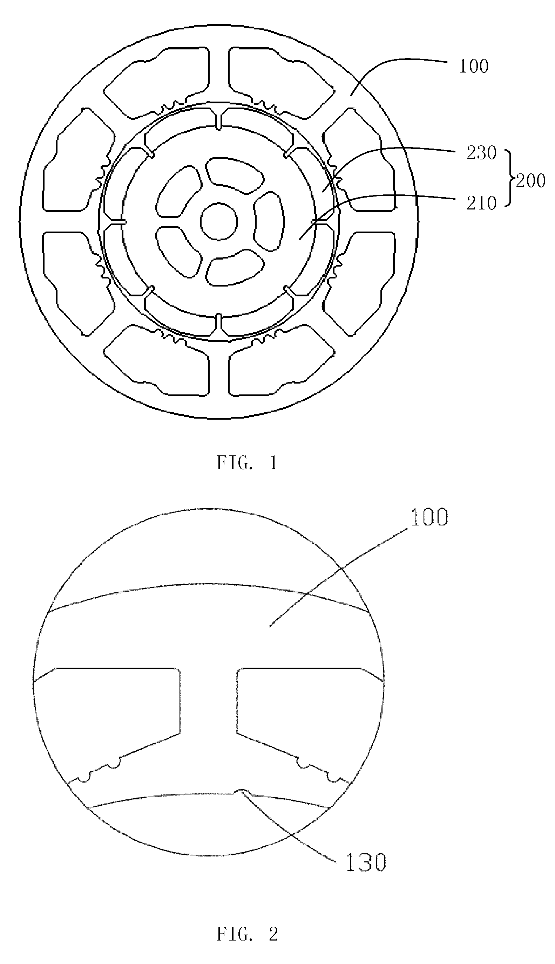

Figure 1 shows the previous invention of the company, the permanent-magnet brushless DC motor used in a range hood. The permanent-magnet brushless DC motor comprises a stator iron core 100 and a rotor 200, wherein the permanent-magnet pole 210 of the rotor 200 is arranged on the outer surface of a rotor iron core 230. Fig. 2 is a partially enlarged view of the stator iron core 100 in Fig. 1. An arc groove 130 is formed in the inner circumferential surface of the teeth of the stator iron core 100 and deviates from the tooth center so that the initial position of the rotor is offset from the dead point where the excitation net torque is zero. However, this kind of single-phase brushless DC motor used in the range hood has low torque density and low operational efficiency. The groove is formed in the inner circumferential surface of the teeth of the stator iron core 100. The air gap between the rotor and the stator formed at the groove is greater than the air gap between the stator and rotor at other positions, so that the cogging torque is comparatively large, and the noise is larger.

### Summary of the Invention

The present invention aims to provide a single-phase brushless motor which can reduce magnetic leakage and improve operational efficiency, reduce cogging torque and weaken the impact of cogging torque on the rotor simultaneously, so as to enable the rotor to stop at a required position.

To achieve the objects mentioned above, the present invention provides a single-phase brushless motor, which comprises a stator and a rotor capable of rotating relative to the rotor, the stator comprises a stator magnetic core and a winding wound on the stator magnetic core, the stator magnetic core comprises an annular yoke and a plurality of teeth extending inwards from the yoke, a crown extending circumferentially is formed on the end of the teeth that is far away from the yoke, the crowns of the adjacent teeth are interconnected to form an annular portion, the winding is wound on the corresponding teeth, the rotor is accommodated in the annular portion of the stator magnetic core, the rotor comprises a rotor magnetic core and a plurality of permanent-magnet poles, the rotor magnetic core is provided with a plurality of grooves, each permanent-magnet pole is disposed within the corresponding accommodation groove, and slots are formed in positions on the peripheral surface of the rotor magnetic core that correspond to the grooves, the slot is communicated with the accommodation groove, and the width of the slot along the circumferential direction of the rotor is less than the width of the accommodation groove.

The inner surface of the annular portion of the stator magnetic core is located on a cylindrical surface the center of circle of which is the center of the rotor.

A groove or a hole is formed in the outer surface of the junction of the crowns of the adjacent teeth.

The rotor magnetic core comprises an annular mounting portion and a plurality of magnetic-conductive portions extending outwards from the annular mounting portion, and the magnetic-conductive portions and the permanent-magnet poles are spaced apart in the circumferential direction.

A plurality of grooves is formed in positions of the inner circumferential surface of the annular yoke that correspond to the plurality of teeth, and the plurality of teeth is engaged in the plurality of grooves, respectively.

The rotor magnetic core is provided with a plurality of first through holes, balance plates are disposed at the two ends of the rotor magnetic core respectively, a plurality of second through holes are respectively formed in positions of the balance plates that correspond to the plurality of first through holes, and the first through holes and the second through holes are provided with connecting pins therein to fix the rotor magnetic core and the balance plates together.

An annular magnet is sleeved at one end of the rotating shaft, and a sensor for detecting the position of the rotor is disposed on the periphery of the stator corresponding to the annular magnet.

The number of the teeth of the stator magnetic core is equal to or an integer multiple of the number of the permanent-magnet poles of the rotor.

In another aspect, the present invention provides a single-phase motor comprising a stator and a rotor capable of rotating relative to the stator. The stator comprises a stator magnetic core and a winding wound on the stator magnetic core. The stator magnetic core comprises an annular yoke and a plurality of teeth extending inwards from the yoke. Crowns extending circumferentially are formed at the tail ends of the teeth that are far away from the yoke. The crowns cooperatively form a receiving space. The rotor is accommodated in the receiving space of the stator magnetic core. The rotor comprises a plurality of magnetic-conductive portions and a plurality of permanent-magnet poles alternately arranged in the circumferential direction of the rotor, the permanent-magnet poles are polarized circumferentially, and the adjacent permanent magnetic poles have contrary polarities.

Preferably, when the stator winding is de-energized, the rotor is positioned at an initial position by the interaction between the teeth and the leakage magnetic field of the permanent-magnet pole.

Preferably, when the stator winding is de-energized, the rotor is positioned at the initial position where a middle of the permanent-magnet pole substantially aligns with a middle of a corresponding tooth in a radial direction of the rotor.

The present invention has the following beneficial effects: a single-phase motor is provided by the present invention, wherein built-in type permanent-magnet poles are used by the rotor, and slots or magnetic bridges are arranged in the outer ends of the permanent-magnet poles to which the rotor magnetic core is corresponding, and the initial position of the rotor may be positioned by a leakage magnetic field of the permanent-magnet pole. The crowns of the stator magnetic core are connected to form a closed annular portion, the inner surface of the annular portion is located on a cylindrical surface with a rotor center as the circle center, and there is no need to arrange a positioning groove on the inner surface of the annular portion, thereby reducing the unevenness of air gap between the stator and the rotor and reducing the cogging torque of the motor.

Please refer to the detailed description and drawings of the present invention for a further understanding of the features and technology contents of the present invention, however the drawings are presented for purposes of reference and illustration only and not of limitation to the present invention.

### Brief Description of the Drawings

The technical solution of the present invention and other beneficial effects will be apparent by describing in detail the specific embodiments of the present present invention in conjunction with the drawings as follows.

Wherein,
Fig. 1 is a sectional view of the stator and rotor of existing magnetic steel surface mounted single-phase brushless DC motors applied in range hoods;
Fig. 2 is a partial enlarged diagram of the stator in Fig. 1;
Fig. 3 is a perspective view of a single-phase brushless DC motor of the present invention;
Fig. 4 is a perspective view of the stator magnetic core and the rotor magnetic core of the single-phase brushless DC motor of Fig. 3;
Fig. 5 is a cross section view of stator and rotor of the single-phase brushless DC motor of the present invention;
Fig. 6 is a perspective view of annular yoke of the stator core of the single-phase brushless DC motor of the present invention;
Fig. 7 is a perspective view of the teeth of the stator core of the single-phase brushless DC motor of the present invention;
Fig. 8 is a perspective view of the rotor of the single-phase brushless DC motor of the present invention;
Fig. 9 is a perspective view of the single-phase brushless DC motor of the present invention by removing rotor core and permanent-magnet pole;
Fig. 10 is a section view of the single-phase brushless DC motor of the present invention;
Fig. 11 is a waveform of the back EMF of the single-phase brushless DC motor of the present invention;
Fig.12 is a waveform of the back EMF of existing magnet surface-mounted type single-phase brushless DC motor;
Fig. 13 is a waveform of cogging torque of the single-phase brushless DC motor of the present invention;
Fig.14 is a waveform of cogging torque of magnet surface-mounted type single-phase brushless DC motor;
Fig. 15 is a performance data graph of the single-phase brushless DC motor of the present invention;
Fig. 16 is a performance data graph of the magnet surface-mounted type single-phase brushless DC motor.

### Detailed Description of the Invention

For further explanation of technological means taken by the present invention and the effects thereof, it will be described in details below in conjunction with preferred embodiments of the present invention and accompanying drawings thereof.

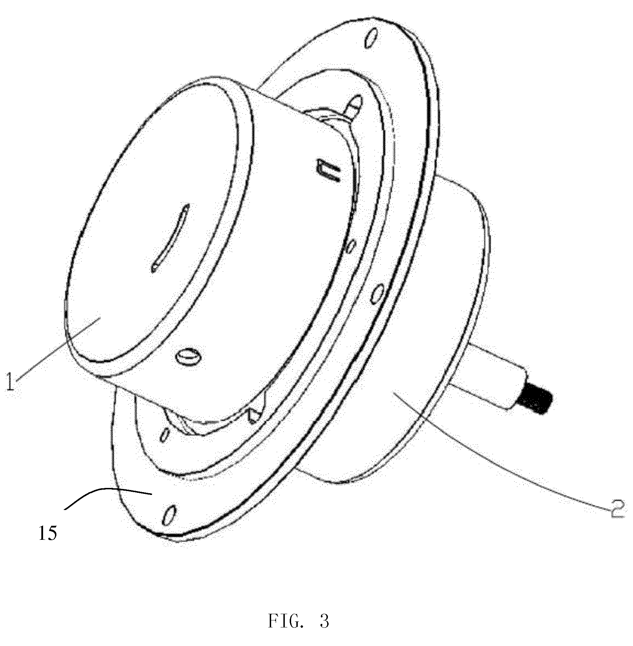

Referring to Figs. 3-7, an embodiment of the instant invention provides a single-phase brushless DC motor comprising a stator and a rotor rotating relative to the stator. The stator comprises a stator core 3 made of magnetic-conductive material such as iron and a winding 5 wound on the stator core 3. The stator core 3 comprises an annular yoke 31 and a plurality of teeth 32 extending inwards from the yoke 31. Crowns 321 extending circumferentially are formed at the tail ends of the teeth 32 that are far away from the yoke 31, the crowns 321 of the adjacent teeth 32 are interconnected to form an annular portion 33, and the winding 5 is wound on the corresponding teeth 32. The rotor is accommodated in the annular portion 33 of the stator core 3, the rotor comprises a rotor core 6 made of magnetic-conductive material such as iron and a plurality of permanent-magnet poles 71 made of permanent magnets, the rotor core 6 is provided with a plurality of grooves 61 extending axially, each permanent-magnet pole 71 is arranged in the corresponding groove 61, slots 62 are formed in positions on the peripheral surface of the rotor magnetic core 6 that correspond to the grooves 61, the slot 62 is located at the radial outer end of corresponding groove 61 and communicated with the corresponding groove 61, and the width of the slot 62 along the circumferential direction of the rotor is less than the width of the groove 61. The rotor core 6 comprises an annular mounting portion 601 and a plurality of magnetic-conductive portions 602 extending outwards from the annular mounting portion 601, the magnetic-conductive portions 602 and the permanent-magnet poles 71 are alternately arranged circumferentially, preferably each permanent-magnet pole 71 is disposed radially and polarized circumferentially, and the adjacent permanent magnetic poles 71 have contrary polarities. Preferably, the rotor core 6 is formed by axially stacking multi-layer monolithic laminations, the radial outer ends of adjacent magnetic-conductive portions 602 of the lamination are separated from each other by the slots 62, and the radial inner ends of adjacent magnetic-conductive portions 602 are connected to the annular portions 33. It will be appreciated that the lamination may also be in split structure, i.e. adjacent magnetic-conductive portions 602 are formed separately and then assembled together. Preferably, the outer surface of the magnetic-conductive portion 602 inwardly shrinks gradually from the center towards the ends in a circumferential direction to thereby form between the stator and the rotor an uneven air gap symmetrical about a middle line extending through the middle of the magnetic-conductive portion 602. Such a design can improve the wave pattern of cogging torque. Alternatively, the outer surface of the magnetic-conductive portion 602 can be coincident on concentric circles. The stator winding 5 is supplied with a single phase current.

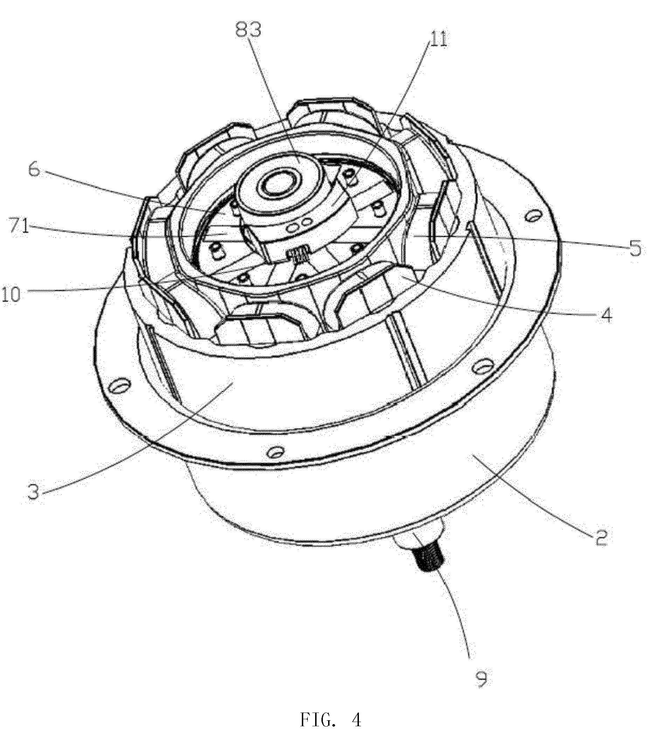

Referring to Fig. 4, teeth 32 of the stator magnetic core 3 are provided with an insulated frame 4, the winding 5 is disposed around the insulated frame 4.

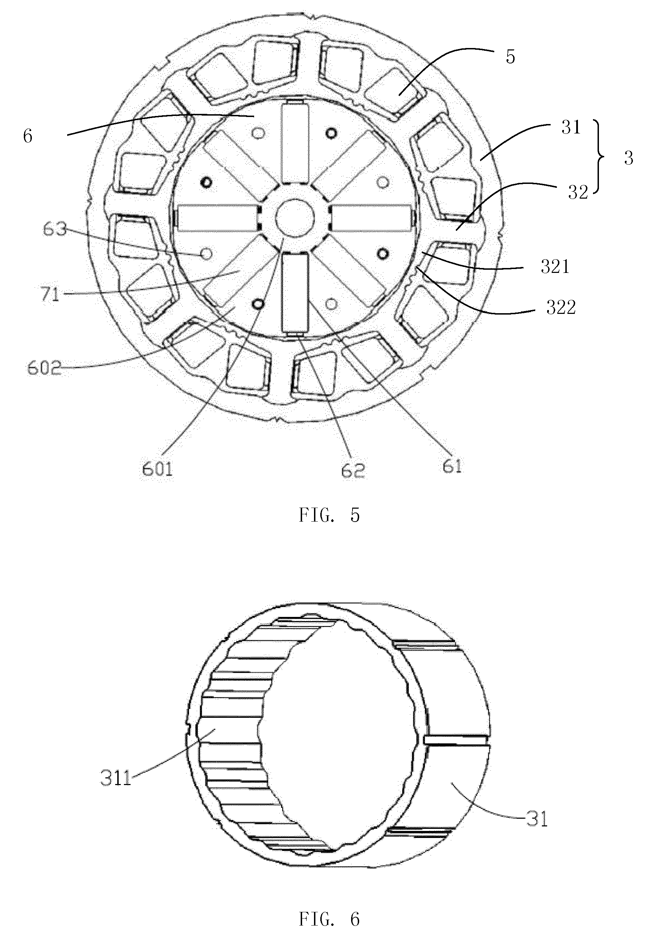

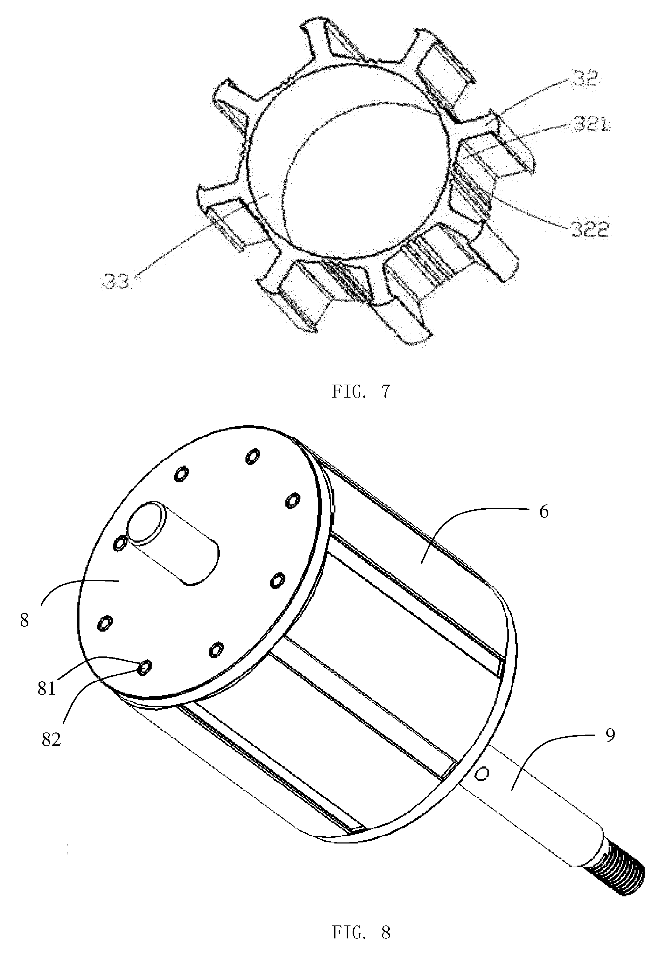

Referring to Figs. 6 and 7, the stator magnet core uses a split structure, i.e. the annular yoke 31 and tooth are separately formed. Several grooves 311 corresponding to several teeth 32 are disposed within the inner circumferential surface of the annular yoke 31, and the several teeth 32 are engaged in the several grooves 311, respectively. After the stator winding 5 is wound around the corresponding teeth 32 of stator magnetic core 3, the yoke 31 is assembled together with the teeth again, and such designs may facilitate stator wiring and increase the slot fill factor of the stator winding.

Referring to Fig. 7, the groove or holes 322 are formed in the outer surface at the junction of the crown 321 of the adjacent teeth 32, thus a magnetic bridge with larger magnetic resistance is formed at the junction to reduce magnetic leakage.

Referring to Fig. 5 and Figs. 8-9, the first through hole 63 is disposed on the magnetic conductive portion 602 of the rotor magnetic core 6, a balancing plate 8 is disposed on the two ends of the rotor magnetic core 6 respectively, and several second through holes 81 are disposed at the position corresponding to several first through holes 63 on the balancing plate 8, and a connecting pin 82 is disposed in both the first through hole 63 and second through hole 81 to fix the rotor magnetic core 6 and balancing plate 8 together.

A third through hole 84 is formed in the center position of the balancing plate 8, and a rotating shaft 9 extends through the center of the rotor magnetic core 6 and the third through holes 84 of the balancing plate 8 respectively.

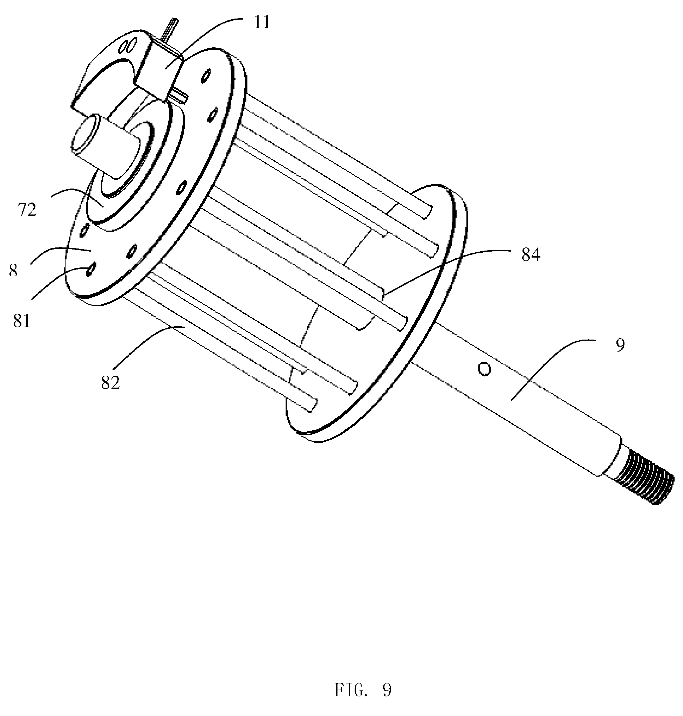

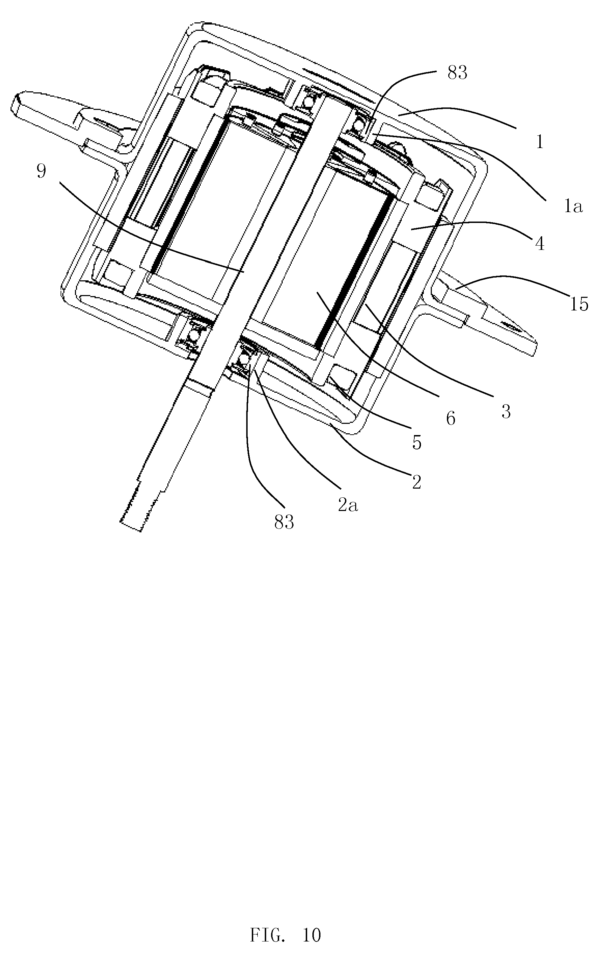

Please refer to Fig. 9 and Fig. 10, the outside of the stator and rotor is provided with an end cap 1 and a rear cap 2 respectively, and bearings 83 are mounted in bearing mounting seats 1a and 2a of the end cap 1 and rear cap 2 respectively. The rotating shaft 9 is rotatably assembled to the end cap 1 and rear cap 2 via the bearings 83. An annular magnet 72 is disposed at the outer side of the balance plate 8 near the end cap 1, the annular magnet 72 is fixed to the rotating shaft 9 and rotates synchronously with the rotating shaft 9, and the outer perimeter of the annular magnet 72 is provided with a sensor such as Hall sensor 11 for sensing the position of the rotor. The end cap 1 and the rear cap 2 are fixed to a mounting seat 15 which is provided with a mounting structure such as mounting holes for fixing and mounting the motor on equipment such as a range hood.

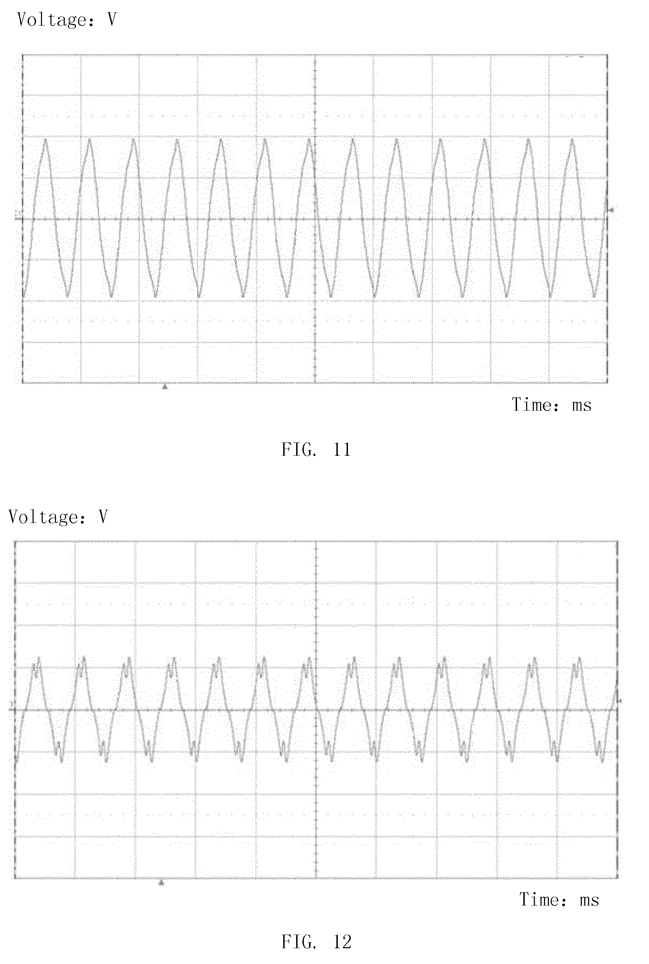

Refer to Fig. 11 and Fig. 12, it can be seen from comparison between the waveform of back electromotive force for the single-phase brushless DC motor of the present invention and the waveform of back electromotive force for the existing single-phase brushless DC motor that the back electromotive force for the single-phase brushless DC motor of the present invention is closer to a sine than the back electromotive force for the single-phase brushless DC motor as shown in Fig. 1.

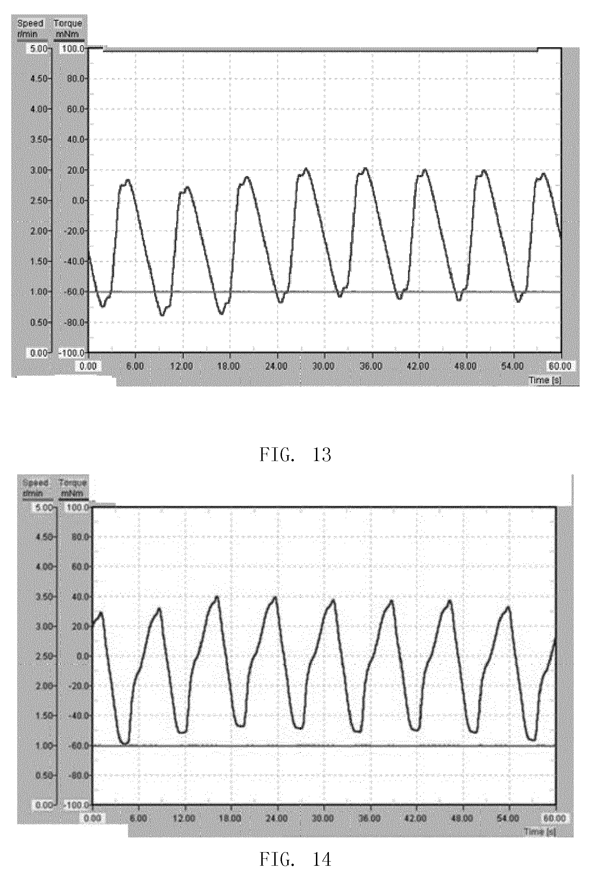

Refer to Fig. 13 and Fig. 14, it can be seen from comparison between the waveform of cogging torque for the single-phase brushless DC motor of the present invention and the waveform of cogging torque for the existing single-phase brushless DC motor that the cogging torque for the single-phase brushless DC motor of the present invention is less than the cogging torque for the single-phase brushless DC motor as shown in Fig. 1.

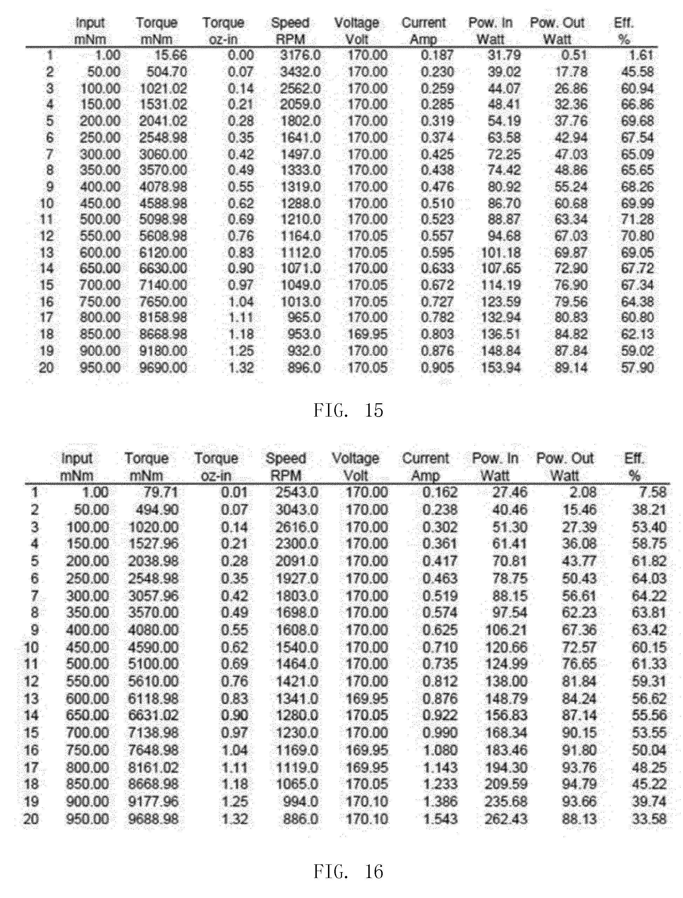

Refer to Fig. 15 and Fig. 16, it can be seen from comparison between the performance data graph for the single-phase brushless DC motor of the present invention and the performance data graph for the existing single-phase brushless DC motor that the operation efficiency for the single-phase brushless DC motor of the present invention is higher than the operation efficiency for the single-phase brushless DC motor as shown in Fig. 1, for example, the efficiency is improved by 14% from 53.55% to 67.34% at the same input of 700mNm.

As described above, as to the single-phase brushless DC motor in the embodiments described above, the rotor uses internal permanent magnets, the crowns 321 of the stator magnetic core 3 are connected to form a closed annular portion 33, the inner surface of the annular portion 33 is located on a cylindrical surface concentric with the rotor, and there is no need to arrange a positioning groove on the inner surface of the annular portion, thereby reducing the unevenness of air gap between the stator and the rotor and reducing the cogging torque of the motor. The initial position of the rotor can be positioned by the interaction between the teeth 32 and the leakage magnetic field of the permanent-magnet pole 71. In this embodiment, the initial position is offset from the dead point and the initial position of the rotor may be adjusted by adjusting the position of the magnetic bridge 322 between the adjacent teeth 32. If the magnetic bridge 322 is designed to be exactly located in the middle of the adjacent teeth, when the stator winding is de-energized, the rotor will stop at the initial position where the middle of each magnetic-conductive portion 602 aligns or substantially aligns with the middle position of a pair of corresponding teeth and the middle of the permanent-magnet pole 71 aligns or substantially aligns with the middle of the corresponding tooth 32 in a radial direction of the rotor. With such designed motors, the rotor may realize bi-directional (counter-clockwise or clockwise) start by cooperating with two sensors and a controller of the motor (the controller controls the direction of the energizing current of the stator windings according to the rotor position sensed by the sensor). If the magnetic bridge 322 is designed to deviate the middle position of the adjacent teeth, such as in Fig. 5 the magnetic bridge 322 deviates the middle position of adjacent teeth by a distance in a counterclockwise direction, the initial position of the rotor will rotate a corresponding angle in a counterclockwise direction. The rotor is easy to realize a clockwise start with such designed motors cooperating with a sensor and a controller of the motor. If the magnetic bridge 322 is designed to deviate the middle position of the adjacent teeth, for example, in Fig. 5 the magnetic bridge 322 deviates the middle position of the adjacent teeth in a clockwise direction, the initial position of the rotor will rotate a corresponding angle in a clockwise direction. The rotor is easy to realize a counter-clockwise start with such designed motors cooperating with a sensor and a controller of the motor.

The slots 62 may reduce the magnetic leakage produced at the end of the permanent-magnet pole 71. Understandably, the slots 62 may not completely separate from the outer end of adjacent magnetic conductive portions 602, i.e. the slots 62 may be replaced by magnetic bridges in other shapes, for example, connection between the outer ends of adjacent magnetic conductive portions 602 is via a connection portion in which a notch/aperture and the like is formed to reduce the cross-sectional area, thereby increasing the resistance of the connection portion to reduce the magnetic leakage.

In the above-mentioned embodiments, the number of the teeth of the stator magnetic core is equal to the number of the rotor permanent-magnet poles and each winding is wound on a single tooth. Understandably, the number of the teeth of the stator magnetic core may also be K times of the number of the rotor permanent poles and each winding is wound on K teeth, wherein K is an integer greater than 1.

Understandably, the brushless motor structure of the present invention is not limited to DC motors, it can also be used to AC motors such as synchronous motors, and the speed of the motor rotor is 750 rpm/min if the stator winding of 8-pole/8-slot brushless motor of the above-mentioned embodiment is connected to 50 Hz AC power.

As described, other various corresponding modifications and variations can be made by those ordinary skilled in the art according to the technical scheme and technical concept of the, for example the rotor magnetic core 6 may be axially stacked by the laminations with the same structure, and may be axially stacked by the laminations with different structures, for example in some lamination layers, the outer ends of adjacent magnetic conductive portions 602 are connected while in some other lamination layers, the outer ends of adjacent magnetic conductive portions 602 are disconnected from each other. The material of the rotor permanent-magnet poles may be ferrite or rare earth materials or the like; the teeth 32 in the stator magnetic core 3 may be formed separately from the yoke 31, and may also be integrally formed with the yoke 31, and the winding portion of the teeth may be integrally formed with the crown and may also be formed separately, and all such modifications and variations are belong to the scope of the appended claims of the present invention.

## Claims

1. A single-phase motor, comprising a stator and a rotor capable of rotating relative to the stator, wherein
the stator comprises a stator magnetic core (3) and a winding (5) wound on the stator magnetic core (3), the stator magnetic core (3) comprises an annular yoke (31) and a plurality of teeth (32) extending inwards from the yoke (31), crowns (321) extending circumferentially are formed at the tail ends of the teeth (32) that are far away from the yoke (31), the crowns (321) of the adjacent teeth (32) are interconnected to form an annular portion (33), the winding (5) is wound on the corresponding teeth (32); and
the rotor is accommodated in the annular portion (33) of the stator magnetic core (3), the rotor comprises a rotor magnetic core (6) and a plurality of permanent-magnet poles (71), the rotor magnetic core (6) is provided with a plurality of grooves (61), each permanent-magnet pole (71) is disposed within a corresponding groove (61).

2. The single-phase motor according to claim 1, wherein slots (62) are formed in positions on the peripheral surface of the rotor magnetic core (6) that correspond to the grooves (61), each slot (62) is communicated with a corresponding groove (61), and the width of the slot (62) along the circumferential direction of the rotor is less than the width of the corresponding groove (61).

3. The single-phase motor according to claim 1 or 2, wherein the inner surface of the annular portion (33) of the stator magnetic core (3) is located on a cylindrical surface coaxial with the rotor.

4. The single-phase motor according to any one of claims 1-3, wherein a magnetic bridge is disposed on the junction of the crowns (321) of the adjacent teeth (32).

5. The single-phase motor according to any one of claims 1-4, wherein a groove or a hole (322) is formed in the outer surface of the junction of the crowns (321) of the adjacent teeth (32).

6. The single-phase motor according to any one of claims 1-5, wherein the rotor magnetic core (6) comprises an annular mounting portion (601) and a plurality of magnetic-conductive portions (602) extending outwards from the annular mounting portion (601), and the magnetic-conductive portions (602) and the permanent-magnet poles (71) are alternately arranged in the circumferential direction of the rotor.

7. The single-phase motor according to claim any one of claims 1-5, wherein the rotor magnetic core (6) comprises a plurality of magnetic-conductive portions (602), the magnetic-conductive portions (602) and the permanent-magnet poles (71) are alternately arranged in the circumferential direction of the rotor, the permanent-magnet poles (71) are polarized circumferentially, and the adjacent permanent magnetic poles (71) have contrary polarities.

8. The single-phase motor according to claim 7, wherein the outer surface of the magnetic-conductive portion (602) inwardly shrinks gradually from the middle thereof towards opposite ends thereof in a circumferential direction of the rotor to thereby form between the stator and the rotor an uneven air gap symmetrical about a middle line extending through the middle of the magnetic-conductive portion.

9. The single-phase motor according to any one of claims 1-8, wherein a plurality of grooves (311) are formed in positions on the inner circumferential surface of the annular yoke (31) that correspond to the plurality of teeth (32), and the plurality of teeth (32) are engaged in the plurality of grooves (311), respectively.

10. The single-phase motor according to any one of claims 1-9, wherein the rotor magnetic core (6) is provided with a plurality of first through holes (63), balance plates (8) are disposed at the two ends of the rotor magnetic core (6) respectively, a plurality of second through holes (81) are respectively formed in positions on the balance plates (8) that correspond to the first through holes (63), and the first through holes (63) and the second through holes (81) are provided with connecting pins (82) therein to fix the rotor magnetic core (6) and the balance plates (8) together.

11. The single-phase motor according to any one of claims 1-10, wherein an annular magnet (72) is sleeved at one end of the rotating shaft (9), and a sensor (11) for detecting the position of the rotor is disposed on the periphery of the rotor that corresponds to the annular magnet (72).

12. The single-phase motor according to any one of claims 1-11, wherein the number of the teeth of the stator magnetic core is equal to or an integer multiple of the number of the permanent-magnet poles of the rotor.

13. A single-phase motor, comprising a stator and a rotor capable of rotating relative to the stator, wherein
the stator comprises a stator magnetic core (3) and a winding (5) wound on the stator magnetic core (3), the stator magnetic core (3) comprises an annular yoke (31) and a plurality of teeth (32) extending inwards from the yoke (31), crowns (321) extending circumferentially are formed at the tail ends of the teeth (32) that are far away from the yoke (31), the crowns (321) cooperatively forming a receiving space, the winding (5) is wound on the corresponding teeth (32); and
the rotor is accommodated in the receiving space of the stator magnetic core (3), the rotor comprises a plurality of magnetic-conductive portions (602) and a plurality of permanent-magnet poles (71) alternately arranged in the circumferential direction of the rotor, the permanent-magnet poles (71) are polarized circumferentially, and the adjacent permanent magnetic poles (71) have contrary polarities.

14. The single-phase motor according to claim 13, wherein when the winding is de-energized, the rotor is positioned at an initial position by the interaction between the teeth and the leakage magnetic field of the permanent-magnet pole.

15. The single-phase motor according to claim 13, wherein when the stator winding is de-energized, the rotor is positioned at an initial position where a middle of the permanent-magnet pole substantially aligns with a middle of a corresponding tooth in a radial direction of the rotor.
